# EUROPÄISCHE PATENTSCHRIFT

(11) **EP 2 481 955 B1**
(45) Veröffentlichungstag und Bekanntmachung des Hinweises auf die Patenterteilung: **10.12.2014**
(21) Anmeldenummer: 12000524.4
(22) Anmeldetag: 27.01.2012
(51) Int. Cl.: F16H 55/36, F16H 3/54, F02B 67/06, B60K 25/02

(54) **Anordnung mit Verbrennungskraftmaschine, elektrischer Maschine und Planetengetriebe zwischen selbigen**
Assembly with combustion engine, electrical engine and planetary gear between same
Agencement doté d'un moteur à combustion interne, d'une machine électrique et d'un engrenage épicycloïdal entre celui-ci

(30) Priorität: 01.02.2011 DE 102011010093
(43) Veröffentlichungstag der Anmeldung: 01.08.2012
(73) Patentinhaber: Audi AG, 85045 Ingolstadt (DE)
(72) Erfinder: Misala, Andreas, 74343 Sachsenheim (DE); Mendle, Johann, 85457 Wörth (DE)
(74) Vertreter: Lehle, Josef

(56) Entgegenhaltungen:
- EP-A1- 1 459 931
- EP-A2- 1 555 456
- DE-A1-102006 053 139
- JP-U- 56 148 133
- US-A- 5 842 944

## Beschreibung

Die Erfindung betrifft eine Anordnung mit einer Verbrennungskraftmaschine und einer elektrischen Maschine, die über ein Planetengetriebe miteinander gekoppelt sind, gemäß dem Oberbegriff des Patentanspruchs 1 und ein Kraftfahrzeug mit einer solchen Anordnung.

Eine Anordnung mit einer Verbrennungskraftmaschine mit einer Kurbelwelle und einer elektrischen Maschine mit einem Rotor, die über ein Planetengetriebe miteinander gekoppelt sind, ist aus der EP 1 282 772 B1 und der DE 10 2006 037 577 A1 bekannt.

Sinn dieser Anordnung ist es, die elektrische Maschine sowohl als Starter für die Verbrennungskraftmaschine zu betreiben, als auch als von selbiger angetriebener Generator. Durch geeignete Platzierung von Kupplungen und/oder Freiläufen in dem Planetengetriebe oder zwischen anderen Elementen der Anordnung ist es möglich, unterschiedliche Übersetzungsverhältnisse einzustellen. Beispielsweise dreht sich die elektrische Maschine bevorzugt beim Starten der Verbrennungskraftmaschine im Verhältnis schneller, als wenn sie als Generator arbeitet.

Vorliegend ist davon ausgegangen, dass eine bestimmte Kupplung bei ihrem Schließen das Übersetzungsverhältnis zwischen der elektrischen Maschine und der Verbrennungskraftmaschine auf einen festen Wert einstellt, wobei bei geöffneter Kupplung entweder gar kein fester Wert eingestellt ist, oder ein anderer Wert eingestellt ist - dies kann durch andere Kupplungen und Freiläufe festgelegt sein.

Beispielsweise beschreibt DE 10 2006 037 577 A1 als Kupplung eine Bremse zwischen dem Hohlrad des Planetengetriebes und einem bezüglich der Verbrennungskraftmaschine festen Bauteil an dem Gehäuse der Verbrennungskraftmaschine. Ein Planetenträger des Planetengetriebes ist mit der Kurbelwelle der Verbrennungskraftmaschine gekoppelt, und das Sonnenrad des Planetengetriebes mit der elektrischen Maschine gekoppelt. Wird die Bremse geschlossen und dabei das Hohlrad festgehalten, muss sich das Sonnenrad in einem bestimmten Übersetzungsverhältnis bezüglich des Planetenträgers drehen (bzw. umgekehrt).

Man verwendet bisher in derartigen Anordnungen reibschlüssige Kupplungen. Diese bauen jedoch sehr groß, da sie besonders beim Start der Verbrennungskraftmaschine hohe Drehmomente übertragen müssen Die EP 1 555 456 A2 offenbart eine Anordnung mit den Merkmalen des Oberbegriffs von Anspruch 1, zum Koppeln eines Verbrennungsmotors mit einer elektrischen Maschine über ein Planetengetriebe. Das Planetengetriebe umfasst dabei ein Sonnenrad, das mit einer Riemenscheibe fest verbunden ist, mit welcher wiederum die elektrische Maschine koppelbar ist. Weiterhin umfasst das Planetengetriebe Planeten, die mit dem Sonnenrad und einem umlaufenden Hohlrad des Planetengetriebes gekoppelt sind. Der Planetenträger ist dabei über eine Wellenschraube mit der Kurbelwelle des Verbrennungsmotors verbunden. Des Weiteren umfasst die Anordnung eine Kupplungseinrichtung mit zwei Kupplungen, wobei die eine eine Kupplung des Hohlrads mit dem Gehäuse bewirkt und die andere eine Kupplung zwischen dem Hohlrad und dem Planetenträger. Die Kupplungen können dabei auch als Klauenkupplungen ausgebildet sein, was erfordert dass mit der elektrischen Maschine stets die Synchrondrehzahl der jeweiligen Gangstufe angefahren werden kann.

Es ist Aufgabe der vorliegenden Erfindung, einen Weg aufzuzeigen, wie die Anordnung kleiner bauen kann.

Die Aufgabe wird durch eine Anordnung gemäß Patentanspruch 1 und durch ein Kraftfahrzeug mit den Merkmalen gemäß Patentanspruch 5 gelöst.

Die erfindungsgemäße Anordnung ist gekennzeichnet durch eine Einrichtung zum Ansteuern der Bremse und zum Ansteuern der Verbrennungskraftmaschine und/oder der elektrischen Maschine derart, dass die Drehzahlen von Rotor und Kurbelwelle mit einer Mindestgenauigkeit gemäß dem vorbestimmten Übersetzungsverhältnis eingestellt werden, das mit Hilfe der Bremse einstellbar ist, und zwar bevor die Einrichtung dann in der Folge die Bremse schließt. Weiterhin ist zwischen dem Planetenträger und dem Sonnenrad ein Freilauf angeordnet.

Erfindungsgemäß werden somit bei geöffneter Bremse solche Drehzahlen eines Rotors der elektrischen Maschine und einer Kurbelwelle der Verbrennungskraftmaschine eingestellt, dass sie zumindest mit einer vorbestimmten Mindestgenauigkeit in genau dem Verhältnis zueinander stehen, das dem festen Wert entspricht, auf den das Übersetzungsverhältnis bei Schließen der Bremse eingestellt wird. Erst nachfolgend wird die Bremse geschlossen.

Mit anderen Worten werden die elektrische Maschine und die Verbrennungskraftmaschine passend derart miteinander synchronisiert, dass eine Drehzahldifferenz zwischen den Bauteilen, die von der Bremse miteinander gekoppelt werden, einen vorbestimmten Wert unterschreitet. In diesem Falle ist es möglich, eine Formschlusskupplung zu verwenden, also eine Kupplung, die bei ihrem Schließen eine formschlüssige Verbindung zwischen zwei Elementen bzw. Bauteilen bewirkt. Es handelt sich hierbei insbesondere um eine Zahn- oder Klauenkupplung, welche einsetzbar ist, und derartige Kupplungen bauen viel kleiner als reibschlüssige Kupplungen für vergleichbare Maximalmomente. Dadurch kann in der Anordnung und somit in einem Kraftfahrzeug Platz eingespart werden.

Die erfindungsgemäße Anordnung erlaubt insbesondere auch einen sog. "Change of Mind"-Betrieb (Fahrerwunschänderung): Lässt ein Fahrzeugführer das Kraftfahrzeug ausrollen und entscheidet sich dann nach einer Weile, während der sich die Drehzahl der Verbrennungskraftmaschine und der elektrischen Maschine reduziert haben, wieder um und gibt Gas (betätigt das Fahrpedal), dann soll die Verbrennungskraftmaschine möglichst schnell beschleunigt werden. Dies erfolgt durch die elektrische Maschine, die aber kurzfristig zunächst einmal vorbeschleunigt wird, bevor die Bremse geschlossen wird. Diese Vorgehensweise ist besonders effizient, auch im Vergleich zu bisherigen Vorgehensweisen, bei denen beim Gasgeben nach einem Ausrollen eine reibschlüssige Kupplung unmittelbar geschlossen wird. Diese bisherige Vorgehensweise kann dazu führen, dass Längskraft und Schlupf in einem Riementrieb zwischen Verbrennungskraftmaschine und elektrischer Maschine kurzfristig überhöht wird.

Erfindungsgemäß ist die Kurbelwelle der Verbrennungskraftmaschine mit einem Planetenträger gekoppelt und der Rotor der elektrischen Maschine ist mit dem Sonnenrad des Planetengetriebes gekoppelt und das Hohlrad ist mit einer Bremse an einem festen Bauteil der Verbrennungskraftmaschine bzw. einem zu dieser Verbrennungskraftmaschine festen Bauteil festlegbar. Bei geöffneter Bremse wird dann die Drehzahl des Rotors derart eingestellt, dass das Hohlrad mit einer vorbestimmten Mindestgenauigkeit zum Stehen kommt, bevor die Bremse geschlossen wird.

Beispielsweise wird bei der Anordnung gemäß der DE 10 2006 037 577 A1 durch die Erfindung die elektrische Maschine derart beschleunigt, dass das Hohlrad zum Stehen kommt, bevor die Bremse geschlossen wird. Das Beschleunigen der elektrischen Maschine kann besonders leicht erfolgen und ist bei einem "Change of Mind"-Betrieb (einer Fahrerwunschänderung) auch angezeigt.

Die Einrichtung zum Ansteuern steuert somit im Zweifel zunächst die elektrische Maschine, gegebenenfalls auch die Verbrennungskraftmaschine an, und erst dann die Bremse. Die Einrichtung kann insbesondere Steuerbefehle empfangen, z. B. erhält sie Informationen über die Stellung eines Fahrpedalsensors o. ä.

Bei der erfindungsgemäßen Anordnung ist bevorzugt, damit diese klein baut, die Bremse eine Formschlusskupplung, insbesondere eine Zahn- oder Klauenkupplung.

Die elektrische Maschine ist bevorzugt über einen Riementrieb mit dem Planetengetriebe gekoppelt, damit sie nicht an einer festgelegten Stelle angeordnet sein muss, insbesondere mehr oder weniger seitlich von der Verbrennungskraftmaschine bzw. dem Planetengetriebe anordenbar ist, damit die Anordnung in einem Kraftfahrzeug-Motorraum platzsparend unterbringbar ist. Über den Riementrieb können auch weitere Aggregate wie z. B. ein Kompressor für eine Klimatisierungseinrichtung angekoppelt werden.

Nachfolgend wird eine bevorzugte Ausführungsform der Erfindung unter Bezug auf die Zeichnung beschrieben, in der
- Fig. 1: die erfindungsgemäße Anordnung aus Verbrennungskraftmaschine und Planetengetriebe mit daran über einen Riementrieb angekoppelter elektrischer Maschine in einer Prinzipdarstellung veranschaulicht und
- Fig. 2: in einem radialen Schnitt das Planetengetriebe mit einer Riemenscheibe des Riementriebs und einer Schwingungsdämpfereinheit zeigt.

An eine Verbrennungskraftmaschine 10 mit einer Kurbelwelle 12, die durch die Bewegung von Hubkolben in Brennkammern 14 in Drehung versetzbar ist, ist eine Anordnung 16 angekoppelt, die ein Planetengetriebe umfasst, an das eine Riemenscheibe 18 angekoppelt ist, und das eine Schwingungsdämpfereinheit 20 aufweist. Die Riemenscheibe 18 dient zur Ankopplung einer elektrischen Maschine 22 über einen Riementrieb 24, zu dem eine Riemenscheibe 26 gehört, die über eine Welle 28 mit einem in der Figur nicht gezeigten Rotor der elektrischen Maschine 22 drehbar ist.

Das Planetengetriebe umfasst ein Sonnenrad 30, das mit der Riemenscheibe 18 verbunden ist, und das mit Planeten 32 kämmt, die über einen Planetenträger 34 miteinander verbunden sind. Zwischen Planetenträger 34 und Sonnenrad 30 ist ein Freilauf 35 bereitgestellt. Der Planetenträger 34 ist über einen Flansch 36 mit der Kurbelwelle 12 verbunden. Der Flansch ist über axiale Schrauben 38 mit der Kurbelwelle 12 verschraubt. Zwischen dem Flansch 36 und der Kurbelwelle 12 ist hierbei gleichzeitig ein Trägerblech 40 eingeklemmt, auf dem ein Gummiring 32 aufsitzt, der wiederum einen Stahlring 44 trägt. Das Trägerblech 40, der Gummiring 42 und der Stahlring 44 bilden die Schwingungsdämpfereinheit 20.

Ein Hohlrad 46 des Planetengetriebes ist über eine Bremse 48 mit einem verbrennungskraftmaschinenfesten Bauteil 50 verbunden. Die Bremse 48 umfasst einen Elektromagneten 52, der an das verbrennungskraftmaschinenfeste Bauteil angebunden ist, und der in der Lage ist, einen Anker 54 anzuziehen, der mit dem Hohlrad 46 verbunden ist.

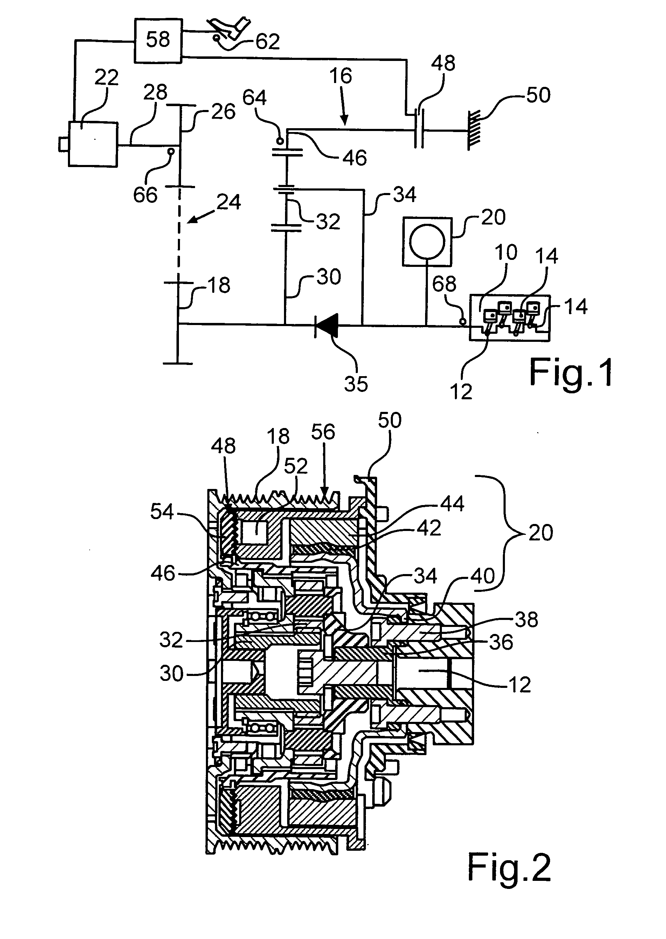

Wie in Fig. 2 zu sehen, sind der Stahlring 44 mit dem Gummiring 42 einerseits und der Elektromagnet 52 und der Anker 54 andererseits in dem selben radialen Bereich angeordnet, und zwar genau zwischen dem mit einer Außenprofilierung 56 versehenen radial äußeren Abschnitt der Riemenscheibe 18 und dem zu äußerst gelegenen Hohlrad 46. An dieser Stelle lassen sich diese Einheiten besonders gut unterbringen.

Eine wesentliche Eigenschaft der dargestellten Anordnung ist es, dass die Bremse 48 mit Formschluss arbeitet, insbesondere als Klauen- oder Zahnkupplung ausgebildet ist. So kann der Anker 54 eine zu dem Elektromagneten 52 passende Verzahnung aufweisen. Eine Formschlussbremse 48 lässt sich nicht in jedem Zustand ohne Beschädigung schließen. Insbesondere darf sich das Hohlrad 46 nicht wesentlich drehen, wenn die Bremse 48 geschlossen wird. Dies wird durch eine Steuereinrichtung 58 ermöglicht:

Es bestehe die Notwendigkeit, die Bremse 48 zu schließen. Dies kann dann gegeben sein, wenn ein Fahrzeugführer aus laufender Fahrt heraus das Fahrzeug zunächst ausrollen lässt, während die elektrische Maschine 22 als Generator arbeitet und sich die Drehzahl der Welle 28 und der Kurbelwelle 12 gemeinsam reduzieren. Hat der Fahrzeugführer dann auf einmal den Wunsch, das Fahrzeug wieder zu beschleunigen, betätigt er das Fahrpedal 60, was durch einen Sensor 62, der die Stellung des Fahrpedals 60 ermittelt, gemessen wird, wobei die Messwerte der Steuereinrichtung 58 zugeführt werden. Es wäre nun notwendig, die Verbrennungskraftmaschine 10 durch die elektrische Maschine 22 zu beschleunigen, wozu dann aber die Bremse 48 zu schließen wäre. Um dies vorzubereiten, synchronisiert die Steuereinrichtung 58 die Drehung der Welle 28 zur Kurbelwelle 12 derart, dass sich bereits dasjenige Übersetzungsverhältnis einstellt, das bei Schließen der Bremse 48 durch den dann fehlenden Freiheitsgrad fest vorgegeben ist. Dieses Übersetzungsverhältnis beträgt beispielsweise 3:1. Die Einstellung des Übersetzungsverhältnisses erfolgt durch Beschleunigung der Drehung der Welle 28, wobei angenommen werden kann, dass sich zeitgleich die Drehzahl der Kurbelwelle 12 weiter verringert. Sobald sich das Verhältnis der Drehzahlen entsprechend dem Übersetzungsverhältnis einstellt, dreht sich das Hohlrad 26 kaum noch bzw. steht still. Dies kann beispielsweise mit Hilfe eines Drehzahlmessers 64 an dem Hohlrad 46 gemessen werden, gegebenenfalls aber indirekt durch Drehzahlmesser 66 an der Welle 28 und 68 an der Kurbelwelle 12 indirekt ermittelt werden. Als Ganzes lässt sich z.B. vorgeben, dass sich das Hohlrad 46 höchstens mit einer Umdrehungszahl von 50 U/min gegenüber dem Gehäuse 50 der Verbrennungskraftmaschine dreht. Dann bewirkt die Steuereinrichtung 51 das Schließen der Bremse 48, und die Verbrennungskraftmaschine 10 wird wirksam durch die elektrische Maschine 22 beschleunigt.

## Patentansprüche

1. Anordnung mit einer Verbrennungskraftmaschine (10) mit einer Kurbelwelle (12) und einer elektrischen Maschine (22) mit einem Rotor, die über ein Planetengetriebe (16) miteinander gekoppelt sind, mit einer Bremse (48) zum Einstellen eines vorbestimmten Übersetzungsverhältnisses zwischen einer Drehzahl des Rotors und einer Drehzahl der Kurbelwelle (12), mit einer Einrichtung (58) zum Ansteuern der Bremse (48) und zum Ansteuern der elektrischen Maschine (22) und/oder der Verbrennungskraftmaschine (10) derart, dass die Drehzahlen von Rotor und Kurbelwelle (12) mit einer Mindestgenauigkeit gemäß dem vorbestimmten Übersetzungsverhältnis eingestellt sind, bevor die Einrichtung (58) die Bremse schließt, wobei das Planetengetriebe ein Sonnenrad (30), einen Planetenträger (34) und ein Hohlrad (46) umfasst, wobei die Bremse dazu ausgelegt ist, eine formschlüssige Verbindung zwischen dem Hohlrad (46) und einem verbrennungskraftmaschinenfesten Bauteil (50) der Verbrennungskraftmaschine (10) zu bewirken, und wobei die Kurbelwelle (12) mit dem Planetenträger (34) und der Rotor mit dem Sonnenrad (30) des Planetengetriebes gekoppelt ist,
**dadurch gekennzeichnet, dass**
zwischen dem Planetenträger (34) und dem Sonnenrad (30) ein Freilauf (35) angeordnet ist.

2. Anordnung nach Anspruch 1, **dadurch gekennzeichnet, dass** die Einrichtung (58) dazu ausgelegt ist, bei geöffneter Bremse (48) die Drehzahl des Rotors derart zu beschleunigen, dass das Hohlrad (46) mit einer vorbestimmten Mindestgenauigkeit zum Stehen kommt, bevor die Bremse (48) geschlossen wird.

3. Anordnung nach Anspruch 1 oder Anspruch 2, **dadurch gekennzeichnet, dass** die Bremse (48) eine Zahn- oder Klauenkupplung ist.

4. Anordnung nach einem der Ansprüche 1 bis 3, **dadurch gekennzeichnet, dass** der Rotor der elektrischen Maschine (22) über einen Riementrieb (24) mit dem Planetengetriebe (16) gekoppelt ist.

5. Kraftfahrzeug mit einer Anordnung nach einem der Ansprüche 1 bis 4.

## Claims

1. Assembly comprising an internal combustion engine (10) having a crankshaft (12) and an electric machine (22) having a rotor, which are coupled to one another by means of a planetary gear (16), having a brake (48) for setting a predetermined gear ratio between a speed of the rotor and a speed of the crankshaft (12), having a device (58) for actuating the brake (48) and for actuating the electric machine (22) and/or the combustion engine (10) such that the speeds of rotor and crankshaft (12) are selected with a minimum accuracy according to the predetermined gear ratio before the device (58) causes the brake to close, the planetary gear comprising a sun wheel (30), a planet carrier (34) and a ring gear (46), the brake being designed to effect a positively locking connection between the ring gear (46) and a component (50) of the combustion engine (10) which is fixedly connected to said combustion engine, and the crankshaft (12) being coupled to the planet carrier (34) and the rotor being coupled to the sun wheel (30) of the planetary gear,
**characterised in that**
a freewheel clutch (35) is arranged between the planet carrier (34) and the sun wheel (30).

2. Assembly according to claim 1, **characterised in that** the device (58) is arranged to accelerate the speed of the rotor when the brake (48) is open so that the ring gear (46) comes to a standstill with a predetermined minimum accuracy before the brake (48) is closed.

3. Arrangement according to claim 1 or 2, **characterised in that** the brake (48) is a toothed clutch or jaw clutch.

4. Arrangement according to one of claims 1 to 3, **characterised in that** the rotor of the electric machine (22) is coupled to the planetary gear (16) via a belt drive (24).

5. Motor vehicle having an arrangement according to one of claims 1 to 4.

## Revendications

1. Ensemble comprenant un moteur à combustion interne (10) pourvu d'un vilebrequin (12) et d'un moteur électrique (22) pourvu d'un rotor, lesquels sont couplés entre eux par l'intermédiaire d'un engrenage épicycloïdal (16), comprenant un frein (48) servant à régler un rapport de transmission prédéfini entre une vitesse de rotation du rotor et une vitesse de rotation du vilebrequin (12), comprenant un dispositif (58) servant à commander le frein (48) et servant à commander le moteur électrique (22) et/ou le moteur à combustion interne (10) de telle manière que les vitesses de rotation du rotor et du vilebrequin (12) sont réglées selon le rapport de transmission prédéfini avec une précision minimale avant que le dispositif (58) ne ferme le frein, où l'engrenage épicycloïdal comprend une roue solaire (30), un porte-satellites (34) et une couronne de train planétaire (46), où le frein est mis au point pour favoriser une liaison par complémentarité de forme entre la couronne de train planétaire (46) et un élément (50) solidaire du moteur à combustion interne du moteur à combustion interne (10), et où le vilebrequin (12) est couplé au porte-satellites (34) et le rotor est couplé à la roue solaire (30) de l'engrenage épicycloïdal,
**caractérisé en ce**
**qu'**une roue libre (35) est disposée entre le porte-satellites (34) et la roue solaire (30).

2. Ensemble selon la revendication 1, **caractérisé en ce que** le dispositif (58) est mis au point pour accélérer, lorsque le frein (48) est ouvert, la vitesse de rotation du rotor de telle manière que la couronne de train planétaire (46) est mise à l'arrêt avec une précision minimale prédéfinie avant que le frein (48) ne soit fermé.

3. Ensemble selon la revendication 1 ou la revendication 2, **caractérisé en ce**
**que** le frein (48) est un système de couplage à dents ou à griffes.

4. Ensemble selon l'une quelconque des revendications 1 à 3,
**caractérisé en ce**
**que** le rotor du moteur électrique (22) est couplé, par l'intermédiaire d'un entraînement à courroie (24), à l'engrenage épicycloïdal (16).

5. Véhicule automobile comprenant un ensemble selon l'une quelconque des revendications 1 à 4.
